(19) **Europäisches Patentamt European Patent Office Office européen des brevets**

(11) **EP 3 674 898 B1**

(12) **FASCICULE DE BREVET EUROPEEN**

(45) Date de publication et mention de la délivrance du brevet:
**24.09.2025 Bulletin 2025/39**

(21) Numéro de dépôt: **19214863.3**

(22) Date de dépôt: **10.12.2019**

(51) Classification Internationale des Brevets (IPC):
**G06F 9/52** $^{(2006.01)}$ **G06F 15/173** $^{(2006.01)}$

(52) Classification Coopérative des Brevets (CPC):
**G06F 15/17325; G06F 9/522**

(54) **SYSTÈME DE SYNCHRONISATION INTER-PROCESSEURS CONFIGURABLE**

KONFIGURIERBARES SYNCHRONISATIONSSYSTEM ZWISCHEN PROZESSOREN

CONFIGURABLE INTER-PROCESSOR SYNCHRONISATION SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.12.2018 FR 1874270**

(43) Date de publication de la demande:
**01.07.2020 Bulletin 2020/27**

(73) Titulaire: **Kalray**
**38330 Montbonnot Saint Martin (FR)**

(72) Inventeurs:
• **DUPONT DE DINECHIN, Benoît**
  **38000 Grenoble (FR)**
• **ODINOT, Arnaud**
  **38000 Grenoble (FR)**
• **RAY, Vincent**
  **38580 Allevard (FR)**

(74) Mandataire: **de Jong, Jean Jacques et al**
**Omnipat**
**610 Chemin de Fabrègues**
**13510 Éguilles (FR)**

(56) Documents cités:
**US-A- 5 222 229** **US-A1- 2012 179 896**
**US-A1- 2015 339 256**

• **ANONYMOUS: "Strategies for pipelining logic", GT GISSELQUIST TECHNOLOGY, LLC, 14 August 2017 (2017-08-14), XP093254874, Retrieved from the Internet <URL:https://zipcpu. com/blog/2017/08/14/strategies-for-pipelining. html>**

## Description

### Domaine technique

L'invention est relative à la synchronisation de plusieurs processeurs exécutant en parallèle des fils d'un même programme partageant une même ressource, et plus spécifiquement à un système de communication point-à-point inter-processeurs permettant à des processeurs de communiquer directement avec d'autres processeurs par l'intermédiaire de registres de travail.

### Arrière-plan technique

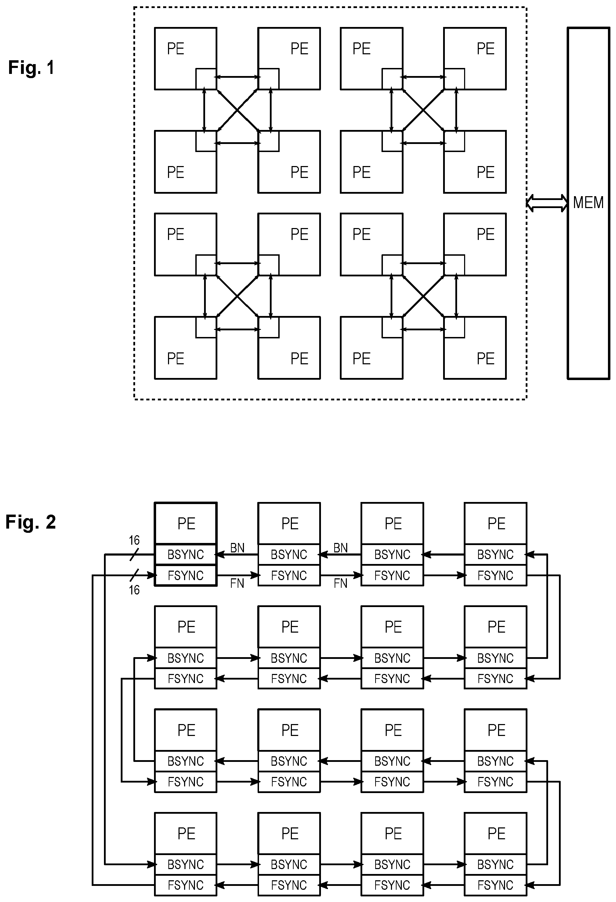

La figure 1 représente un exemple de matrice de 4x4 processeurs PE pouvant être intégrés sur une même puce. Les processeurs sont alors aussi appelés « cœurs » et forment un système multi-cœurs. Les cœurs ou processeurs PE peuvent être reliés à un bus commun également relié à une mémoire partagée MEM. La mémoire MEM peut contenir le code des programmes exécutés par les processeurs et les données de travail des programmes.

La demande de brevet US 2012/179 896 décrit un système de synchronisation inter-processeurs comprenant une pluralité de processeurs connectés sur un bus. Un mécanisme pour synchroniser certains processeurs de façon sélective utilise un signal supplémentaire de non-synchronisation.

Le document intitulé « Strategies for pipelining logic », publié dans GT Gisselquist Technology, 14-08-2017, propose de propager un signal dans une chaîne d'étages dans une architecture pipeline. Il s'agit de propager ou non les données d'un étage à l'autre et d'utiliser un signal local pour indiquer leur validité.

La demande de brevet US2015-0339256 décrit une technique de communication inter-processeurs point-à-point, où les processeurs peuvent être groupés par quatre processeurs voisins, comme cela est représenté. Chaque processeur d'un groupe est relié aux trois autres processeurs du groupe par des liens point-à-point câblés. Les liens point-à-point sont conçus pour permettre à chaque processeur d'écrire directement une notification dans un registre de travail désigné d'un autre processeur quelconque du groupe.

Ainsi, les liens point-à-point auxquels on se réfère ici sont des liens physiques qui véhiculent des états de bits directement entre des registres des processeurs. Ces liens physiques ne sont pas à confondre avec des voies de communication génériques entre les processeurs, comme un bus ou un réseau sur puce, qui permettent aussi de transférer des données entre des registres, mais cela de manière logicielle, en exécutant des instructions génériques sur les processeurs qui font transiter les données par une mémoire partagée.

Plus spécifiquement, les processeurs ont dans leur jeu d'instructions une instruction de synchronisation de groupe qui exécute simultanément une commande d'attente avec un premier paramètre et une commande de notification avec un deuxième paramètre. La commande d'attente provoque l'arrêt du processeur et l'attente de l'apparition dans un registre d'événements d'un motif de bits correspondant à celui véhiculé dans son paramètre. La commande de notification provoque l'écriture des bits actifs de son paramètre directement dans les registres d'événements des autres processeurs du groupe. Cette écriture n'a effectivement lieu qu'au moment où le processeur sort de son état d'arrêt.

### Résumé de l'invention

On prévoit de façon générale un système de synchronisation inter-processeurs, comprenant une pluralité de processeurs ; une pluralité de lignes de notification unidirectionnelles connectant les processeurs dans une chaîne ; dans chaque processeur : un registre de synchronisation ayant des bits respectivement associés aux lignes de notification, connectés pour enregistrer les états respectifs de lignes de notification amont, propagés par un processeur amont, et une porte commandée par un registre de configuration pour propager les états des lignes de notification amont sur des lignes de notification aval à un processeur aval.

Chaque processeur peut être configuré en outre pour activer sélectivement des lignes de notification aval en fonction d'un paramètre d'une instruction machine de notification exécutée par le processeur.

Chaque processeur peut être configuré en outre pour suspendre l'exécution d'un programme respectif en fonction d'un paramètre d'une instruction machine d'attente exécutée par le processeur, la suspension étant levée lorsque le registre de synchronisation contient un motif de bits actifs correspondant au paramètre de l'instruction d'attente.

Chaque processeur peut être configuré en outre pour, à la levée de la suspension, réinitialiser le registre de synchronisation.

L'instruction d'attente et l'instruction de notification peuvent former partie d'une instruction machine unique exécutable par le processeur.

Le registre de configuration peut comprendre des bits respectivement associés aux lignes de notification amont, la porte étant configurée pour propager sélectivement les états des lignes de notification amont en fonction des états respectifs des bits du registre de configuration.

Un procédé de synchronisation inter-processeurs comprend des étapes consistant à connecter une pluralité de processeurs dans une chaîne par l'intermédiaire de lignes configurées pour transmettre des bits de notification respectifs dans une même direction ; dans un premier processeur de la chaîne, envoyer un bit de notification vers un deuxième processeur, succédant au premier processeur dans la chaîne ; et dans le second processeur, en fonction de l'état d'un bit de configuration local, propager le bit de notification vers un troisième processeur, succédant au second processeur dans la chaîne.

Le second processeur peut mettre en œuvre des étapes consistant à enregistrer le bit de notification dans un registre de synchronisation ; exécuter une instruction machine d'attente avec un paramètre, provoquant l'arrêt du processeur ; et sortir le processeur de l'état d'arrêt lorsque le registre de synchronisation contient un motif de bits correspondant au paramètre de l'instruction d'attente.

Le second processeur peut en outre mettre en œuvre des étapes consistant à exécuter une instruction machine de notification avec un paramètre ; et configurer des bits de notification à envoyer au troisième processeur en fonction du paramètre de l'instruction de notification.

Le second processeur, à la sortie de l'état d'arrêt, peut réinitialiser le registre de synchronisation.

## Présentation des figures

Des modes de réalisation seront exposés dans la description suivante, faite à titre non limitatif en relation avec les figures jointes parmi lesquelles :

[Fig. 1] la figure 1, précédemment décrite, est un schéma-bloc d'une matrice de processeurs divisée en plusieurs groupes dans lesquels des processeurs peuvent communiquer par des liaisons point à point ;
[Fig. 2] la figure 2 est un schéma-bloc d'un mode de réalisation de matrice de processeurs où les processeurs sont tous connectés dans une chaîne de liaisons de notification ;
[Fig. 3] la figure 3 est un schéma-bloc d'un mode de réalisation d'une unité de synchronisation avant d'un processeur ;
[Fig. 4] la figure 4 est un schéma-bloc d'un mode de réalisation d'une unité de synchronisation arrière d'un processeur ; et
[Fig. 5] la figure 5 illustre un exemple de configuration d'une chaîne de processeurs.

## Description détaillée de l'invention

La structure connue de la figure 1 permet de mettre en œuvre une synchronisation avec une latence quasi nulle entre les quatre processeurs de chaque groupe. Des processeurs externes à un groupe peuvent aussi participer à une synchronisation, mais la synchronisation entre les groupes a lieu alors de manière logicielle par l'intermédiaire d'une voie de communication partagée par tous les processeurs, qui augmente significativement la latence.

La figure 2 est un schéma-bloc d'un mode de réalisation de matrice de processeurs organisés selon une structure de synchronisation qui permet à un nombre quelconque de processeurs de la matrice de participer à une synchronisation avec une faible latence. Plus spécifiquement, les processeurs sont organisés dans une chaîne configurable de liens point-à-point de synchronisation. Par « chaîne », on entend que chaque processeur est relié physiquement à un seul autre processeur qui le précède, ou processeur amont, et à un seul autre processeur qui le succède, ou processeur aval. Comme cela est représenté par des flèches, chaque lien entre deux processeurs peut être bidirectionnel, et la chaîne peut être fermée. De préférence, la chaîne est configurée pour que chaque processeur soit relié à deux processeurs physiquement adjacents. Comme cela est représenté, la chaîne peut parcourir les processeurs par rangées, en inversant le sens d'une rangée à l'autre.

Chaque processeur comprend une paire d'unités de synchronisation, la première unité FSYNC gérant les liens dans un sens dit « avant », et l'autre unité BSYNC gérant les liens dans le sens inverse, dit « arrière ». Chaque lien avant FN ou arrière BN entre deux processeurs peut inclure plusieurs lignes physiques, chacune prévue pour véhiculer l'état d'un bit représentant un événement ou une notification. Un tel lien à plusieurs lignes peut ainsi véhiculer plusieurs notifications différenciées par les rangs des lignes.

Les unités FSYNC et BSYNC étendent des unités d'exécution classiquement prévues dans un processeur, et peuvent être configurées pour répondre à deux instructions machine dédiées, à savoir une instruction d'attente et une instruction de notification. Comme dans la demande de brevet US2015-0339256 susmentionnée, les instructions d'attente et de notification peuvent faire partie d'une instruction machine unique dite de synchronisation de groupe SYNCGROUP ayant deux paramètres, l'un identifiant des canaux d'attente et l'autre des canaux de notification. Si le paramètre des canaux d'attente est nul, l'instruction se comporte comme une simple instruction de notification. Inversement, si le paramètre des canaux de notification est nul, l'instruction se comporte comme une simple instruction d'attente. L'exécution d'une instruction SYNCGROUP a la particularité, s'il identifie au moins un canal d'attente, de placer le processeur dans un état d'attente avant d'émettre toute notification. Les notifications sont émises dès que le processeur sort de l'état d'attente.

Ici, l'instruction de synchronisation de groupe peut avoir un paramètre composite de 64 bits, répartis en 16 bits de notification avant notifyF, 16 bits de notification arrière notifyB, 16 bits de canaux d'attente avant waitclrF, et 16 bits de canaux d'attente arrière waitclrB.

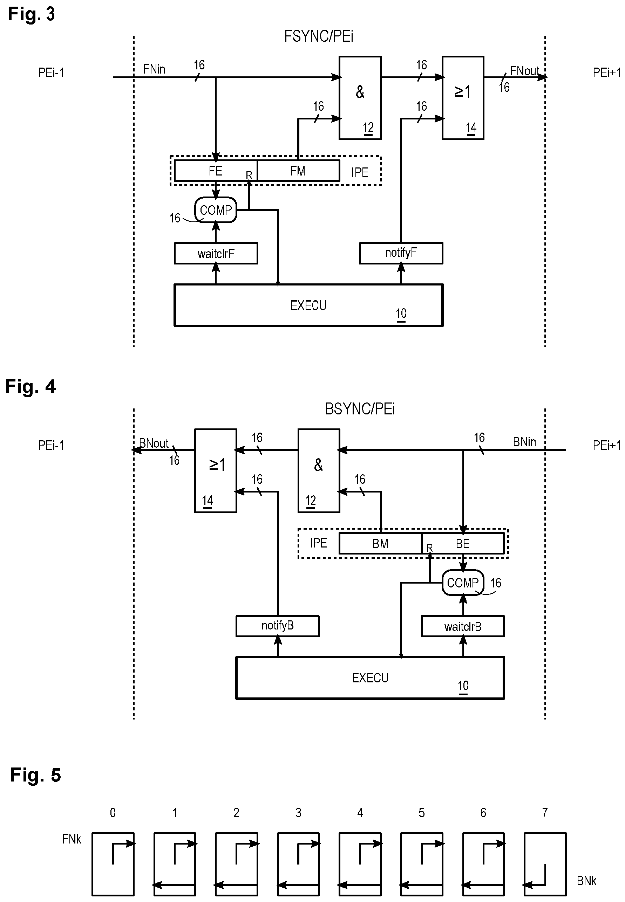

La figure 3 est un schéma-bloc d'un mode de réalisation d'unité de synchronisation avant FSYNC d'un processeur PEi, où i est le rang du processeur dans la chaîne. Le processeur comprend des unités d'exécution 10 configurées pour réagir à des instructions machine exécutées sur le processeur, notamment l'instruction de synchronisation de groupe. Le processeur comprend également un banc de registres de travail, parmi lesquels un registre est dédié à la synchronisation, que l'on appelle registre IPE (« Inter-Processor Event register » ou registre d'événements inter-processeurs). Par exemple, un registre IPE de 64 bits peut comporter un champ FE d'événements avant de 16 bits, un champ BE d'événements arrière de 16 bits, un champ FM de mode avant de 16 bits, et finalement un champ BM de mode arrière de 16 bits.

Dans l'unité FSYNC représentée à la figure 3, gérant le lien de notification avant FN, ce sont les champs FE et FM qui sont utilisés, ainsi que les paramètres waitclrF et notifyF des instructions de synchronisation. Les champs BE et BM du registre IPE, et les paramètres waitclrB et notifyB sont utilisés par l'unité BSYNC gérant le lien de notification arrière BN et décrite ultérieurement.

Le champ FE du registre IPE est configuré pour enregistrer les notifications arrivant sur les 16 lignes de notification avant entrantes FNin, produites par le processeur précédent PEi-1. Par exemple, chaque bit du champ FE, initialement à « 0 », passe à « 1 » lorsque la ligne de notification correspondante passe à « 1 », et le bit reste à « 1 » même si la ligne passe ensuite à « 0 ».

Les 16 bits du champ de mode FM du registre IPE forment une première entrée d'une porte ET bit à bit 12, l'autre entrée recevant les 16 lignes de notification entrantes FNin. La sortie sur 16 bits de la porte 12 contribue aux états des 16 lignes de notification avant sortantes FNout, allant au processeur suivant PEi+1.

Ainsi, les états des lignes entrantes FNin peuvent être individuellement bloqués ou propagés sur les lignes de notification sortantes FNout en fonction des bits contenus dans le champ de mode FM. En d'autres termes, des notifications émises par le processeur précédent PEi-1 peuvent être propagées sélectivement au processeur suivant PEi+1.

Le processeur courant PEi peut également émettre des notifications avant à destination du processeur suivant. Pour cela les bits du paramètre notifyF d'une instruction de synchronisation exécutée par le processeur PEi sont combinés à la sortie de la porte ET 12 par une porte OU bit à bit 14. Ainsi, tout bit à « 1 » du paramètre notifyF est transmis sur une ligne de notification sortante correspondante, indépendamment de l'état du bit correspondant de la sortie de la porte ET 12.

Lorsqu'une instruction de synchronisation est exécutée par le processeur PEi avec un paramètre waitclrF non-nul, le processeur est mis dans un état d'attente et le paramètre waitclrF détermine la condition requise pour sortir le processeur de l'état d'attente. Plus spécifiquement, le paramètre waitclrF identifie, par des positions de bit respectives, les notifications qui doivent être reçues par le processeur PEi. Toutes les notifications entrantes sont enregistrées dans le champ de registre FE, y compris celles qui transitent par le processeur mais qui ne sont pas destinées au processeur. Ainsi, le contenu du champ FE est comparé en 16 au paramètre waitclrF, de manière que la comparaison produise un résultat « vrai » lorsque les bits à « 1 » du champ de registre FE incluent les bits à « 1 » du paramètre waitclrF. Le résultat « vrai » est pris en compte par les unités d'exécution 10 du processeur pour que le processeur sorte de l'état d'attente et poursuive l'exécution de son programme. Par ailleurs, le résultat « vrai » de la comparaison provoque une réinitialisation des bits du champ de registre FE correspondant aux bits à « 1 » du paramètre waitclrF pour qu'une nouvelle vague de notifications puisse être prise en compte.

La figure 4 est un schéma-bloc d'un mode de réalisation d'unité de synchronisation arrière BSYNC du processeur PEi. Cette unité utilise les champs BE et BM du registre IPE, et les paramètres waitclrB et notifyB de l'instruction de synchronisation, cela pour gérer les liens de notification arrière BN de manière similaire à l'unité de la figure 3. La structure est symétrique pour traiter des lignes de notification entrantes BNin provenant du processeur PEi+1, et des lignes de notification sortantes BNout allant au processeur PEi-1.

Les champs de mode FM et BM des registres IPE des processeurs peuvent être initialisés par un système d'exploitation au démarrage du système, pour configurer des groupes de processeurs à l'intérieur desquels les processeurs se synchronisent entre eux. De préférence, pour réduire la latence, chaque groupe est formé de processeurs consécutifs dans la chaîne.

Par défaut, lorsque les champs BM et FN sont à 0 pour tous les processeurs, il n'y a pas de propagation de notifications et seules des notifications directes sont possibles. On crée ainsi des groupes de trois processeurs, où chaque processeur PEi peut émettre 16 notifications différentes vers chacun de ses deux processeurs adjacents PEi-1, PEi+1, et recevoir 16 notifications différentes de chacun de ses deux processeurs adjacents.

La mise à « 1 » d'un bit d'un champ de mode BM ou FM dans un processeur PEi permet la propagation d'une notification correspondante entre les processeurs PEi-1, PEi+1 de part et d'autre du processeur PEi.

Lorsqu'un même bit est à 1 dans tous les champs de mode, tous les processeurs en aval, dans le sens des liens, reçoivent une notification correspondante émise par l'un quelconque des processeurs. Si la chaîne est configurée en anneau, comme cela est le cas à la figure 2, on empêche un bouclage infini de la propagation en mettant à 0 le bit correspondant dans l'un des champs de mode.

En jouant sur les valeurs des bits dans les champs de mode, on peut configurer entre ces deux extrêmes un grand nombre de combinaisons de groupements de processeurs, et les groupements peuvent différer d'une ligne de notification à l'autre.

En outre, quel que soit le groupement choisi, chaque processeur à l'extrémité d'un groupe est à l'intersection de deux groupes adjacents. En effet, même si ce processeur ne propage pas de notification d'un groupe vers l'autre, il peut lui-même émettre une notification vers chacun des groupes, et recevoir une notification de chacun des groupes.

On décrit ci-après un exemple d'application de cette structure à une synchronisation de type barrière. Dans une telle synchronisation, tous les processeurs impliqués doivent atteindre un même point, ou barrière, pour pouvoir poursuivre la suite du traitement.

Dans la structure de la demande de brevet US2015-0339256 la barrière, impliquant au plus quatre processeurs d'un groupe, est matérialisée dans chaque processeur par un registre ayant un bit pour chaque processeur du groupe. Dès qu'un processeur atteint la barrière, il le notifie aux autres processeurs en positionnant le bit qui lui est associé dans les registres des autres processeurs, puis s'arrête pour attendre que les autres processeurs atteignent la barrière. Un processeur à l'arrêt reprend son activité dès que tous les bits correspondant aux autres processeurs sont positionnés dans son registre, en commençant par réinitialiser les bits du registre.

La figure 5 illustre une configuration des processeurs de la figure 2 permettant d'effectuer une synchronisation de type barrière impliquant, par exemple, un groupe de huit processeurs consécutifs 0 à 7 de la chaîne. Pour cela, une seule ligne de notification avant et une seule ligne de notification arrière peuvent être utilisées entre chaque paire de processeurs adjacents du groupe. Bien que les lignes de notification puissent être différentes d'une paire de processeurs à l'autre, on suppose ici, par souci de clarté, que les lignes de notification utilisées ont toutes le même rang k, où k est compris entre 0 et 15 - on utilise ainsi une ligne de notification avant notée FNk et une ligne de notification arrière notée BNk entre les paires de processeurs.

Les processeurs 0 à 7 sont tous configurés pour ne pas propager les notifications avant FNk, c'est-à-dire que le bit de rang k de leurs champs de registre FE est à 0. En d'autres termes, un processeur du groupe ne peut recevoir une notification FNk que de son prédécesseur immédiat, comme cela est illustré par des flèches coudées vers la droite partant de l'intérieur des processeurs.

En outre, les processeurs 1 à 6 sont configurés pour propager les notifications arrière BNk, c'est-à-dire que le bit de rang k de leurs champs de registre BE est à 1. Cet état est illustré par des flèches horizontales vers la gauche.

Bien entendu, chaque processeur peut toujours émettre une notification quelconque dans les deux sens, et ses champs de registre FE et BE enregistrent les notifications qui transitent par le processeur. Ainsi, le processeur 7 est illustré avec une flèche coudée vers la gauche indiquant qu'il peut émettre une notification arrière BNk.

Les processeurs 1 à 6 sont programmés pour, en arrivant à la barrière, exécuter successivement :

- une instruction d'attente d'une notification avant FNk,

- une instruction d'émission d'une notification avant FNk, et

- une instruction d'attente d'une notification arrière BNk.

Les deux premières instructions peuvent être mises en œuvre par une seule instruction SYNCGROUP avec des paramètres waitclrF et notifyF identifiant chacun seulement le rang k. La troisième instruction peut être une instruction SYNCGROUP avec tous ses paramètres nuls sauf le paramètre waitclrB qui identifie seulement le rang k.

Le processeur 0 est programmé pour, en arrivant à la barrière, exécuter successivement :

- une instruction d'émission d'une notification avant FNk, et

- une instruction d'attente d'une notification arrière BNk.

Ces deux instructions peuvent être mises en œuvre par deux instructions SYNCGROUP consécutives dont tous les paramètres sont nuls, sauf respectivement les paramètres notifyF et waitclrB, identifiant chacun seulement le rang k.

Finalement, le processeur 7 est programmé pour, en arrivant à la barrière, exécuter successivement :

- une instruction d'attente d'une notification avant FNk, et

- une instruction d'émission d'une notification arrière BFk.

5

Les deux instructions peuvent être mises en œuvre par une seule instruction SYNCGROUP avec des paramètres waitclrF et notifyB identifiant chacun seulement le rang k.

Les processeurs 0 à 7 se mettent ainsi en attente au fur et à mesure qu'ils atteignent la barrière. Les processeurs 1 à 7, commençant par exécuter une instruction d'attente, n'émettent pas de notification tant que la barrière n'est pas levée. Seul le processeur 0 commence par une instruction de notification FNk dès qu'il atteint la barrière, avant de s'arrêter à son tour sur une attente.

La notification FNk émise par le processeur 0 est enregistrée par le processeur 1, qui sort de son état d'attente en émettant une notification FNk au processeur 2 suivant. Le processeur 1 se met de nouveau en attente, cette fois d'une notification arrière BNk. En effet, bien que le processeur 1 ait atteint la barrière, on ne sait pas si les autres processeurs en aval l'ont atteinte.

Ces événements se propagent de processeur en processeur jusqu'au processeur 7. Dès qu'il reçoit la notification FNk, le processeur 7 émet une notification arrière BNk au processeur 6, et poursuit son programme. La barrière a été atteinte par tous les processeurs, car le dernier processeur 7 ne reçoit de notification que si tous les processeurs précédents en ont émis une en atteignant la barrière.

Le processeur 6, ainsi que les processeurs 1 à 5, étant configurés pour propager la notification arrière BNk, la notification BNk arrive quasi simultanément à tous les processeurs 0 à 6. Chacun de ces processeurs sort de son état d'attente et poursuit son programme.

Cette structure de synchronisation ouvre également de nouvelles perspectives d'exécution de traitements parallèles, notamment de boucles dont les itérations ne sont pas indépendantes. Des itérations sont indépendantes dans une boucle quand leurs accès à des données partagées comme des tableaux s'effectuent sur des éléments différents.

Une structure multi-cœurs classique permet d'allouer plusieurs processeurs pour exécuter en parallèle plusieurs itérations d'une boucle. Par exemple, chaque itération d'une boucle du type suivant est indépendante et peut être affectée à un cœur différent :

```
for (i=0; i < n; i++) {
    a[i] = a[i] + b[i];
}
```

En effet, on sait à tout instant que la variable a[i] en opérande est définie et à jour. Ce type de boucle est appelée boucle parallèle. En pratique, cette boucle est transformée de la manière suivante en NB_PE sous-boucles parallèles, où NB_PE est le nombre de processeurs alloués à l'exécution et pid est le numéro du processeur qui exécute la sous-boucle :

```
for (i = 0; i + pid < n; i += NB_PE) {
    int ii = i + pid;
    a[ii] = a[ii] + b[ii];
}
barrier(pid);
```

La directive « barrier » désigne une fonction disponible classiquement dans l'environnement d'exécution des processeurs multi-cœurs, par exemple pthread_barrier_wait.

Il existe des boucles dites vectorielles où la valeur d'un opérande dépend de l'ordre d'exécution des itérations, par exemple une boucle du type :

```
for (i=0; i < n; i++) {
    a[i] = a[i+1] + b[i];
}
```

Dans ce cas il est incorrect d'exécuter en parallèle deux itérations de la boucle, par exemple :

$$a[1] = a[2] + b[1],$$

et

$$a[2] = a[3] + b[2]$$

En effet, si la deuxième itération est terminée avant la première, la variable a[2] contiendra la nouvelle valeur alors que la première itération a besoin de l'ancienne valeur.

Pour éviter cet écueil de façon classique, la boucle est exécutée par un seul cœur, ou bien la boucle est décomposée en deux boucles parallèles en passant par une table temporaire temp[] sous la forme :

```
for (i=0; i < n; i++) {
        temp[i] = a[i+1];
}

for (i=0; i < n; i++) {
        a[i] = temp[i] + b[i];
}
```

Dans la structure décrite ici, les itérations de la boucle vectorielle peuvent être traitées en parallèle sur une chaîne de processeurs en la récrivant de la manière suivante :

```
if (pid == NB_PE - 1) syncgroup(notifyB);
for (i = 0; i + pid < n; i += NB_PE) {
        int ii = i + pid;
        float t1 = a[ii+1] + b[ii];
        if (pid == NB_PE - 1) syncgroup(notifyB);
        else syncgroup(notifyF);
        if (pid == 0) syncgroup(waitclrB);
        else syncgroup(waitclrF);
        a[ii] = t1;
}
if (pid == NB_PE - 1) syncgroup(notifyB) ;
else syncgroup(notifyF);
barrier(pid);
```

On notera que les variables ii et t1 ont une portée locale limitée à chaque corps de boucle, alors que les tableaux a [] et b[] sont des variables de portée globale, partagées par les processeurs.

Ainsi, si on a 8 processeurs, le processeur 0 exécute :

```
for (i = 0; i < n; i += 8) {
        int ii = i;
        float t1 = a[ii+1] + b[ii];
        syncgroup(notifyF);
        syncgroup(waitclrB);
        a[ii] = t1;
}
syncgroup(notifyF);
barrier(0);
```

Alors que le processeur 1 exécute en parallèle :

```
for (i = 0; i + 1 < n; i += 8) {
        int ii = i + 1;
        float t1 = a[ii+1] + b[ii];
        syncgroup(notifyF);
        syncgroup(waitclrF);
        a[ii] = t1;
}
syncgroup(notifyF);
barrier(1);
```

Et ainsi de suite, jusqu'au processeur 7 qui lui exécute :

```
syncgroup(notifyB);
for (i = 0; i + 7 < n; i += 8) {
        int ii = i + 7;
        float t1 = a[ii+1] + b[ii];
        syncgroup(notifyB);
        syncgroup(waitclrF);
        a[ii] = t1;
}
syncgroup(notifyB);
barrier(7);
```

Comme dans l'exemple de la figure 5, les processeurs 0 à 7 sont tous configurés pour ne pas propager les notifications avant. En outre, les processeurs 1 à 6 sont configurés pour propager les notifications arrière. Les paramètres waitclrF et notifyF identifient les lignes de notification avant utilisées, toutes de rang k dans l'exemple considéré. De même, les paramètres waitclrB et notifyB identifient les lignes de notification arrière utilisées, toutes également de rang k dans l'exemple considéré.

A la première itération, le processeur 0 exécute :

1 :

$$t1 = a[1] + b[0];$$

2 : syncgroup(notifyF );
3 : syncgroup(waitclrB);
4 :

$$a[0] = t1;$$

A la première itération, le processeur 1 exécute en parallèle :

5 :

$$t1 = a[2] + b[1];$$

6 : syncgroup(notifyF);
7 : syncgroup(waitclrF);
8 :

$$a[1] = t1;$$

Ainsi, à la ligne 1, le processeur 0 lit l'ancienne valeur de la variable a[1]. Il est important que cette opération ait lieu avant que la variable a[1] n'ait reçu la nouvelle valeur mise à jour par le processeur 1 à la ligne 8. Le système est donc configuré et programmé pour que la ligne 8 soit toujours exécutée après la ligne 1.

A la ligne 2, le processeur 0 notifie au processeur 1 qu'il a exécuté la lecture de la variable a[1]. (A la ligne 3, le processeur 0 attend en principe une notification arrière pour continuer : celle-ci est émise par l'instruction syncgroup(notifyB) exécutée par le processeur 7 avant son entrée dans la sous-boucle.)

En parallèle, à la ligne 7, le processeur 1 se met en attente après avoir sauvegardé la nouvelle valeur de a[1] dans une variable t1, et n'exécute la ligne 8 qu'une fois la notification du processeur 0 reçue.

De proche en proche, chaque processeur libère le processeur suivant après avoir lu une ancienne valeur de variable, pour que le processeur suivant puisse mettre à jour la variable. Le dernier processeur de la chaîne émet en cours d'itération une notification arrière (syncgroup(notifyB)) qui libère le premier processeur pour démarrer une nouvelle itération.

Finalement, lorsque chaque processeur sort de sa sous-boucle, il exécute une dernière notification, ce qui permet de débloquer les processeurs encore en attente, suivie d'une synchronisation de type barrière nécessaire comme dans le cas d'une boucle parallèle.

On remarquera que dans le corps de boucle, chaque processeur exécute deux instructions SYNCGROUP, la première effectuant une opération de type « notify » et la seconde une opération de type « waitclr ». Compte tenu du schéma de synchronisation en chaîne des processeurs, il est en principe possible d'inverser l'ordre de ces deux instructions, ce qui permet de les combiner en une seule. Cependant, il peut s'avérer plus performant de garder les deux instructions séparées dans les cas où un calcul ne travaillant pas sur les variables globales peut être inséré entre ces instructions. En revanche, l'inversion des deux instructions SYNCGROUP et leur combinaison en une seule permet de synchroniser des boucles vectorielles plus générales, où la distance en nombre d'itérations qui sépare la lecture d'une variable de sa réécriture ne vaut pas exactement un. C'est le cas par exemple de la boucle suivante, avec j > 0 et variable :

$$
\begin{aligned}
&\textbf{for } (i=0; \ i < n; \ i\text{++}) \ \{ \\
&\qquad a[i] = a[i+j] + b[i]; \\
&\}
\end{aligned}
$$

## Revendications

1. Système de synchronisation inter-processeurs, comprenant :

   une pluralité de processeurs (PE) ;
   une pluralité de lignes de notification point-à-point unidirectionnelles (FN, BN) connectant les processeurs dans une chaîne ;
   dans chaque processeur (PEi) :

   i) un registre de synchronisation (FE) ayant des bits respectivement associés aux lignes de notification, connectés pour enregistrer les états respectifs de lignes de notification amont (FNin), propagés par un processeur amont (PEi-1), et
   ii) une porte (12) commandée par un registre de configuration (FM) pour propager sélectivement les états des lignes de notification amont (FNin) sur des lignes de notification aval (FNout) à un processeur aval (PEi+1).

2. Système selon la revendication 1, dans lequel chaque processeur est configuré pour activer sélectivement des lignes de notification aval (NFout) en fonction d'un paramètre (notifyF) d'une instruction machine de notification exécutée par le processeur.

3. Système selon la revendication 2, dans lequel chaque processeur est configuré pour suspendre l'exécution d'un programme respectif en fonction d'un paramètre (waitclrF) d'une instruction machine d'attente exécutée par le processeur, la suspension étant levée lorsque le registre de synchronisation (FE) contient un motif de bits actifs correspondant au paramètre de l'instruction d'attente.

4. Système selon la revendication 3, dans lequel chaque processeur est configuré pour, à la levée de la suspension, réinitialiser le registre de synchronisation (FE).

5. Système selon la revendication 4, dans lequel l'instruction d'attente et l'instruction de notification forment partie d'une instruction machine unique, SYNCGROUP, exécutable par le processeur.

**6.** Système selon la revendication 1, dans lequel le registre de configuration (FM) comprend des bits respectivement associés aux lignes de notification amont, la porte étant configurée pour propager sélectivement les états des lignes de notification amont en fonction des états respectifs des bits du registre de configuration.

**7.** Procédé de synchronisation inter- processeurs, comprenant les étapes suivantes :

connecter une pluralité de processeurs dans une chaîne par l'intermédiaire de lignes point-à-point configurées pour transmettre des bits de notification respectifs dans une même direction ;
dans un premier processeur (PEi-1) de la chaîne, envoyer un bit de notification (FNin) vers un deuxième processeur (PEi), succédant au premier processeur dans la chaîne ; et
dans le second processeur, en fonction de l'état d'un bit de configuration local (FM), propager ou non le bit de notification (FNout) vers un troisième processeur (PEi+1), succédant au second processeur dans la chaîne.

**8.** Procédé selon la revendication 7, dans lequel le second processeur (PEi) met en œuvre les étapes suivantes :

enregistrer le bit de notification dans un registre de synchronisation (FE) ;
exécuter une instruction machine d'attente avec un paramètre (waitclrF), provoquant l'arrêt du processeur ; et
sortir le processeur de l'état d'arrêt lorsque le registre de synchronisation contient un motif de bits correspondant au paramètre de l'instruction d'attente.

**9.** Procédé selon la revendication 8, dans lequel le second processeur (PEi) met en œuvre les étapes suivantes :

exécuter une instruction machine de notification avec un paramètre (notifyF) ; et
configurer des bits de notification (FNout) à envoyer au troisième processeur (PEi+1) en fonction du paramètre de l'instruction de notification.

**10.** Procédé selon la revendication 9, dans lequel le second processeur (PEi), à la sortie de l'état d'arrêt, réinitialise le registre de synchronisation (FE).

**Patentansprüche**

**1.** Interprozessorsynchronisierungssystem, umfassend:

eine Vielzahl von Prozessoren (PE);
eine Vielzahl unidirektionaler Punkt-zu-Punkt-Benachrichtigungsleitungen (FN, BN), die die Prozessoren in einer Kette verbinden;
in jedem Prozessor (PEi):

i) ein Synchronisationsregister (FE), das Bits aufweist, die jeweils den Benachrichtigungsleitungen zugeordnet sind, die zum Aufzeichnen der jeweiligen Zustände von Upstream-Benachrichtigungsleitungen (FNin) konfiguriert sind, die durch einen Upstream-Prozessor (PEi-1) weitergeleitet werden, und
ii) ein Gatter (12), das durch ein Konfigurationsregister (FM) gesteuert wird, zum selektiven Weiterleiten der Zustände der Upstream-Benachrichtigungsleitungen (FNin) über Downstream-Benachrichtigungsleitungen (FNout) an einen Downstream-Prozessor (PEi+1).

**2.** System nach Anspruch 1, wobei jeder Prozessor zum selektiven Aktivieren der Downstream-Benachrichtigungsleitungen (NFout) in Abhängigkeit von einem Parameter (notifyF) einer Maschinenanweisung zum Benachrichtigen konfiguriert ist, die durch den Prozessor ausgeführt wird.

**3.** System nach Anspruch 2, wobei jeder Prozessor zum Unterbrechen der Ausführung eines jeweiligen Programms in Abhängigkeit von einem Parameter (waitelrF) einer Maschinenanweisung zum Abwarten konfiguriert ist, die durch den Prozessor ausgeführt wird, wobei die Unterbrechung aufgehoben wird, wenn das Synchronisierungsregister (FE) ein Muster aktiver Bits enthält, das dem Parameter der Warteanweisung entspricht.

**4.** System nach Anspruch 3, wobei jeder Prozessor zum Zurücksetzen, bei dem Aufheben der Unterbrechung, des Synchronisierungsregisters (FE) konfiguriert ist.

5. System nach Anspruch 4, wobei die Warteanweisung und die Benachrichtigungsanweisung Teil einer einzigen Maschinenanweisung, SYNCGROUP, sind, die durch den Prozessor ausführbar ist.

6. System nach Anspruch 1, wobei das Konfigurationsregister (FM) Bits umfasst, die jeweils den Upstream-Benachrichtigungsleitungen zugeordnet sind, wobei das Gatter zum selektiven Weiterleiten der Zustände der Upstream-Benachrichtigungsleitungen in Abhängigkeit von den jeweiligen Zuständen der Bits des Konfigurationsregisters konfiguriert ist.

7. Interprozessorsynchronisierungsverfahren, umfassend die folgenden Schritte:

Verbinden einer Vielzahl von Prozessoren in einer Kette über Punkt-zu-Punkt-Leitungen, die zum Übertragen jeweiliger Benachrichtigungsbits in eine gleiche Richtung konfiguriert sind;
in einem ersten Prozessor (PEi-1) der Kette, Senden eines Benachrichtigungsbits (FNin) an einen zweiten Prozessor (PEi), der dem ersten Prozessor in der Kette folgt; und
in dem zweiten Prozessor, in Abhängigkeit von dem Zustand eines lokalen Konfigurationsbits (FM), Weiterleiten des Benachrichtigungsbit (FNout) an einen dritten Prozessor (PEi+1), der in der Kette auf den zweiten Prozessor folgt, oder nicht.

8. Verfahren nach Anspruch 7, wobei der zweite Prozessor (PEi) die folgenden Schritte implementiert:

Aufzeichnen des Benachrichtigungsbits in einem Synchronisationsregister (FE);
Ausführen einer Maschinenanweisung zum Warten mit einem Parameter (waitclrF), wobei das Anhalten des Prozessor verursacht wird; und
Wecken des Prozessors aus dem Haltezustand, wenn das Synchronisierungsregister ein Bitmuster enthält, das dem Parameter der Warteanweisung entspricht.

9. Verfahren nach Anspruch 8, wobei der zweite Prozessor (PEi) die folgenden Schritte implementiert:

Ausführen einer Maschinenanweisung zum Benachrichtigen mit einem Parameter (notifyF); und
Konfigurieren der Benachrichtigungsbits (FNout), die in Abhängigkeit von dem Parameter der Benachrichtigungsanweisung an den dritten Prozessor (PEi+1) gesendet werden sollen.

10. Verfahren nach Anspruch 9, wobei der zweite Prozessor (PEi) bei dem Wecken aus dem Haltezustand das Synchronisationsregister (FE) zurücksetzt.

**Claims**

1. Interprocessor synchronization system, comprising:

a plurality of processors (PE);
a plurality of unidirectional point-to-point notification lines (FN, BN) connecting the processors in a chain;
in each processor (PEi):

i) a synchronization register (FE) having bits respectively associated with the notification lines, connected to record the respective states of upstream notification lines (FNin), propagated by an upstream processor (PEi-1), and
ii) a gate (12) controlled by a configuration register (FM) to selectively propagate the states of the upstream notification lines (FNin) on downstream notification lines (FNout) to a downstream processor (PEi+1).

2. The system according to claim 1, wherein each processor is configured to selectively activate downstream notification lines (NFout) according to a parameter (notifyF) of a notification machine instruction executed by the processor.

3. The system according to claim 2, wherein each processor is configured to suspend the execution of a respective program according to a parameter (waitclrF) of a wait machine instruction executed by the processor, the suspension being raised when the synchronization register (FE) contains a pattern of active bits corresponding to the parameter of the standby instruction.

4. The system according to claim 3, wherein each processor is configured to reset the synchronization register (FE) when the suspension is raised.

5. The system according to claim 4, wherein the standby instruction and the notification instruction form part of a single machine instruction, SYNCGROUP, executable by the processor.

6. The system according to claim 1, wherein the configuration register (FM) includes bits respectively associated with the upstream notification lines, the gate being configured to selectively propagate the states of the upstream notification lines according to the respective states of the bits in the configuration register.

7. Inter-processor synchronization method, comprising the following steps:

connecting a plurality of processors in a chain through point-to-point lines configured to transmit respective notification bits in a same direction;
in a first processor (PEi-1) of the chain, sending a notification bit (FNin) to a second processor (PEi), succeeding the first processor in the chain; and
in the second processor, depending on the state of a local configuration bit (FM), propagating or not the notification bit (FNout) to a third processor (PEi+1), succeeding the second processor in the chain.

8. The method according to claim 7, wherein the second processor (PEi) performs the following steps:

saving the notification bit in a synchronization register (FE);
executing a wait machine instruction with a parameter (waitclrF), causing the processor to halt; and
releasing the processor from the halt state when the synchronization register contains a bit pattern corresponding to the parameter of the wait instruction.

9. The method according to claim 8, wherein the second processor (PEi) performs the following steps:

executing a notification machine instruction with a parameter (notifyF); and
configuring notification bits (FNout) to be sent to the third processor (PEi+1) according to the notification instruction parameter.

10. The method according to claim 9, wherein the second processor (PEi) resets the synchronization register (FE) upon exiting the halt state.

**Fig. 1**

**Fig. 2**

**Fig. 3**

FSYNC/PEi

**Fig. 4**

BSYNC/PEi

**Fig. 5**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2012179896 A

- US 20150339256 A

**Littérature non-brevet citée dans la description**

- Strategies for pipelining logic. *GT Gisselquist Technology*, 14 August 2017